# EUROPÄISCHE PATENTANMELDUNG

(11) **EP 1 310 425 A1**
(43) Veröffentlichungstag der Anmeldung: **14.05.2003**
(21) Anmeldenummer: 01126722.6
(22) Anmeldetag: 08.11.2001
(51) Int. Cl.: B64C 19/00, F42C 9/00, G08G 5/04

(54) **Selbstzerstörungsvorrichtung für Flugzeuge**

(71) Anmelder: Gascom GmbH, Kompressortechnik, 82515 Wolfratshausen (DE)
(72) Erfinder: Summerer, Nikolaus, 80636 München (DE); Summerer, Georg Dipl.-Ing., 82057 Icking (DE)
(74) Vertreter: Szynka, Dirk

(57) **Zusammenfassung**

Die Erfindung betrifft eine Vorrichtung zur Minderung der Folgen eines drohenden Aufpralls eines Flugzeuges auf ein zu schützendes Objekt durch Zerlegen des Flugzeuges in mehrere Teile nach objektiver rechnerischer Beurteilung der Frage, ob ein Aufprall des Flugzeuges auf das Objekt hochwahrscheinlich oder unvermeidlich erscheint.

## Beschreibung

Die vorliegende Erfindung beschäftigt sich mit einem durch die jüngsten Attentate in den USA verstärkt ins öffentliche Bewusstsein gerückten Problem, nämlich der Folgen von Kollisionen von Flugzeugen, insbesondere größeren Verkehrsflugzeugen oder Transportflugzeugen, mit gefährlichen oder aus anderen Gründen zu schützenden Objekten. Prominentes Beispiel für solche Objekte sind Nuklearanlagen, insbesondere Kernkraftwerke.

Nach Presseberichten und Stellungnahmen verschiedener Sachverständiger ist davon auszugehen, dass die Kapselungen der in Deutschland betriebenen Kernkraftwerke einem Aufprall eines größeren Flugzeuges nicht standhalten oder zumindest nicht ohne schwerwiegende Konsequenzen wie einem Ausfall des Kühlsystems standhalten. Bei ausländischen Reaktoren dürfte die Situation ähnlich oder bei älteren Reaktoren noch schwerwiegender sein.

Wenn nun infolge eines den Attentaten in den Vereinigten Staaten vergleichbaren Attentats oder infolge eines unglücklichen Unfalls ein Flugzeug auf ein solches gefährdetes Objekt stürzt oder geflogen wird, so ergeben sich aus dieser Kollision Konsequenzen, die über den wahrscheinlichen Tod oder zumindest schwerste Verletzungen der beteiligten Passagiere und der in dem Objekt anwesenden Personen weit hinausreichen. Es wird insbesondere zu befürchten sein, dass es zu nuklearen Verseuchungen ganzer Landschaften infolge von Kernschmelzen und ähnlichen gravierenden Ereignissen kommt.

Diese Betrachtungen stehen im übrigen stellvertretend für die Gefährdung zu schützender Objekte im Allgemeinen. Bei dem Anschlag auf das World Trade Center hat sich gezeigt, dass die durch das weitere Eindringen der schweren Flugzeuge in die Gebäudekörper einerseits und die Kerosinexplosionen und die folgenden Brände andererseits erfolgende Beschädigung den Einsturz der gesamten Gebäude zur Folge hatte und damit eine außerordentlich hohe Zahl von Todesopfern verursachte, die weit über der Zahl der Passagiere der beteiligten Flugzeuge liegt.

Auch andere Objekte könnten bei einer Kollision mit einem Flugzeug zu schwersten Schäden führen, insbesondere wenn eine große Menschenmasse auf engem Raum konzentriert ist.

Zur Vermeidung von Kollisionen größerer Flugzeuge mit Kernkraftwerken wird derzeit diskutiert, Abfangjägern der Bundesluftwaffe oder anderer Luftwaffen die Erlaubnis zu erteilen, solche Passagierflugzeuge im Notfall abzuschießen. Dabei wird erkannt, dass es Situationen geben kann, in denen eine Rettung der Passagiere des Flugzeuges ohnehin nicht mehr möglich ist und ein über den Verlust der Menschenleben der Passagiere hinausgehendes noch schwerer wiegendes Unglück verhindert werden sollte. So hatte auch die US-amerikanische Luftwaffe bei den jüngsten Anschlägen laut Pressemitteilungen den Auftrag, Passagierflugzeuge notfalls abzuschießen. Es hat sich jedoch gezeigt, dass diese Vorgehensweise wegen der in der Regel zu kurzen Vorwarnzeiten in vielen Fällen nicht greift.

Außerdem ist in der Diskussion, gefährdete Objekte durch Flugabwehrstellungen zu schützen, die von der Position des gefährdeten Objekts aus im Notfall heranfliegende Flugzeuge abschießen könnten.

In beiden Fällen ist die ethische Problematik erheblich, jedoch scheint sich die Einsicht durchzusetzen, dass es beispielsweise im Fall der US-amerikanischen Anschläge letztlich zu einem weniger tragischen Verlauf gekommen wäre, wenn man die beteiligten Flugzeuge vor dem Aufprall hätte abschießen können.

Ausgehend von dieser Problematik liegt der vorliegenden Erfindung das technische Problem zu Grunde, eine Lösungsmöglichkeit zur Minderung der Folgen einer drohenden Kollision mit einem Flugzeug anzugeben.

Erfindungsgemäß ist hierzu eine Vorrichtung vorgesehen, die versehen ist mit: einer Positioniereinrichtung zum Ermitteln von Positionsdaten des Flugzeugs, einem Rechner, der aus den Positionsdaten und der Fluggeschwindigkeit und Flugrichtung sowie aus Positionsdaten des zu schützenden Objekts berechnet, ob eine Kollision des Flugzeugs mit dem zu schützenden Objekt wahrscheinlich ist, und einer Einrichtung, die eine Zerlegung des Flugzeuges in mehrere Teile herbeiführt, wenn die Berechnung ergibt, dass die Kollision wahrscheinlich ist.

Besondere Ausführungsformen der erfindungsgemäßen Vorrichtung sind in den abhängigen Ansprüchen angegeben.

Die Erfindung geht zunächst von der bereits diskutierten Grundlogik aus, dass Gefährdungssituationen vorstellbar sind, in denen der Tod der Flugzeugpassagiere ohnehin noch wahrscheinlich oder sogar unvermeidbar ist. Die Erfindung möchte jedoch das Risiko, dass eine solche Situation unnötigerweise bejaht wird, möglichst minimieren. Dabei ist zu berücksichtigen, dass ein Abfangjäger oder Soldaten an einem Flugabwehrgeschütz letztlich nur aus einer intuitiven Beurteilung der Gefahrensituation heraus handeln können und im Zweifel zur Abwehr eines sehr viel größeren Unglücks - wie in New York geschehen - möglicherweise zu früh ein Flugzeug abschießen könnten.

Demgegenüber erlaubt eine rechnerische Berücksichtigung technischer Daten, nämlich der Positionsdaten und der Flugdaten des Flugzeuges und der Positionsdaten des gefährdeten zu schützenden Objekts, eine sehr viel präzisere und im übrigen objektive und von menschlichen Fehlentscheidungen befreite Beurteilung des Zeitpunktes, ab dem die zu vermeidende Kollision wahrscheinlich erscheint. Wenn demzufolge mit Hilfe eines Rechners aus den genannten Daten berechnet werden kann, dass ein fliegerisches Ausweichen nicht mehr denkbar ist oder als unwahrscheinlich beurteilt wird, wobei verschiedene Maßstäbe denkbar wären, so könnte aus dieser rechnerischen Beurteilung ein Signal für die Aktivierung einer Einrichtung abgeleitet werden, die das Flugzeug aus sich heraus zerstört, d.h. in mehrere Teile zerlegt.

Bei der Frage, wie hoch die Schwelle der erforderlichen Wahrscheinlichkeit für die Aktivierung der erfindungsgemäßen Vorrichtung gelegt wird, handelt es sich letztlich weniger um eine technische als um eine ethische bzw. politische Frage. Nach Möglichkeit sollte versucht werden, diese Schwelle so hoch wie irgend denkbar zu definieren. Im günstigsten Fall könnte die durch die Erfindung geschaffene Möglichkeit einer rechnerischen Bewertung dieser Wahrscheinlichkeit dazu genutzt werden, die Aktivierung der Vorrichtung erst dann auszulösen, wenn ein Ausweichen des Flugzeuges aus physikalischen Gründen ausgeschlossen erscheint. In der erfindungsgemäßen Vorrichtung könnte also rechnerisch unter Berücksichtigung der verschiedenen Positionsdaten und Flugdaten und der bekannten flugtechnischen Eigenschaften des Flugzeuges analysiert werden, ob ein Ausweichen überhaupt noch, d.h. bei unterstelltem optimalen Pilotenverhalten, denkbar ist.

Andererseits ist nicht auszuschließen, dass diese Schwelle bei einer Auslegung der erfindungsgemäßen Vorrichtung als zu hoch angesehen wird. Je nach Gefährdungscharakter des zu schützenden Objekts könnte es sich auch als notwendig erweisen, das Flugzeug zu einem früheren Zeitpunkt zu zerlegen, wenn also die "physikalische" Unausweichlichkeit der Kollision noch nicht vorliegt. Immerhin ist zu berücksichtigen, dass eine erhebliche Nähe eines Flugzeuges zu einem zu schützenden Objekt an sich bereits einen sehr deutlichen Hinweis auf ein drohendes Attentat oder in anderer Weise abnorme Zustände des Flugzeugs oder in dem Flugzeug darstellt. Unter diesen Voraussetzungen könnte es auch als gerechtfertigt erscheinen, eine Kollision als intolerabel wahrscheinlich anzusehen, wenn sie rein rechnerisch noch nicht sicher ist. Insbesondere könnte die erfindungsgemäße Vorrichtung diese Wahrscheinlichkeitsschwellen für unterschiedliche Objekte auch unterschiedlich definieren.

Selbst bei einer lediglich im Bereich der Wahrscheinlichkeit der Kollision, und nicht im Bereich der Sicherheit, angesiedelten Schwelle wäre gegenüber einer konventionellen Vorgehensweise über Abfangjäger oder Flugabwehrgeschütze ein deutlicher Sicherheitsgewinn gegeben. Zum einen wäre die erfindungsgemäße Vorrichtung im Hinblick auf das Zerlegen des Flugzeugs sehr viel zuverlässiger und sicherer als ein Geschütz oder ein Abfangjäger und könnte schon allein daher einen höher liegenden Wahrscheinlichkeitsschwellenwert tolerabel erscheinen lassen. Zum zweiten sorgt die rechnerische Beurteilung der Kollisionswahrscheinlichkeit für eine erhöhte Sicherheit, weil subjektive Momente wie Angst oder Unsicherheit und Stress durch übergroßen Zeitdruck und Verantwortungsdruck entfallen. Es ist namentlich ausgeschlossen, dass infolge menschlicher Entscheidungen stressbedingt unnötig früh oder zu spät reagiert wird.

Durch die Erfindung soll im übrigen tatsächlich eine Zerstörung des Flugzeuges in soweit erfolgen, dass dieses nicht mehr als einheitliches ballistisches Geschoss wirkt, sondern in mehreren Bruchstücken auftrifft, von denen möglicherweise viele das Objekt verfehlen. Des Weiteren könnte dabei verhindert werden, dass es auf oder in dem zu schützenden Objekt zu einer Explosion des Kerosinvorrates kommt, die insbesondere bei dem World Trade Center letztlich für die außerordentlich hohe Zahl von Todesopfern ursächlich war. Durch die starke Hitzeeinwirkung sind nämlich die statischen Strukturen des Gebäudes zerstört worden, was zu dem vollständigen Kollabieren geführt hat.

Insgesamt ist die Erfindung ethisch wohl auch so zu sehen, dass bei Bekanntwerden des Einsatzes solcher Vorrichtungen eine Wiederholung der in den Vereinigten Staaten durchgeführten Attentate für die Attentäter aussichtslos erscheinen muss und diese somit von solchen Plänen Abstand nehmen sollten.

Ein wesentlicher Anwendungsbereich liegt, wie bereits erwähnt, beim Schutz von Nuklearanlagen.

Als Positioniereinrichtung zur Ermittlung der Positionsdaten des Flugzeuges kommt vorzugsweise ein satellitengestütztes System, insbesondere das als GPS bekannte System, in Betracht. Dabei können auch die Flugdaten, also die Fluggeschwindigkeit und die Flugrichtung, durch das Positioniersystem ermittelt werden, sie können allerdings auch durch anderweitige konventionelle Messeinrichtungen an Bord des Flugzeuges ermittelt werden.

Ferner kann die erfindungsgemäße Vorrichtung einen Speicher enthalten, in dem Positionsdaten der zu schützenden Objekte abgespeichert sind, die sich in einem bestimmten Aktionsbereich des Flugzeuges befinden. Dieser Speicher kann auch während des Fluges durch Datenfernübertragung seitens der zu schützenden Objekte oder seitens eines Flugleitsystems aktualisiert werden. Ferner ist es denkbar, dass die jeweils nächstgelegenen zu schützenden Objekte ihre Positionsdaten an einen Empfänger seitens der Vorrichtung in dem Flugzeug übertragen. Hier richtet sich die Erfindung übrigens zum einen auf die in dem Flugzeug vorgesehene Vorrichtung einschließlich des Empfängers zum Empfang dieser übertragenen Daten und zum anderen auch auf den Satz aus dieser Vorrichtung und dem Sendesystem seitens des zu schützenden Objekts insgesamt.

Ferner kann durch einen Sender seitens des zu schützenden Objekts ein Freigabesignal ausgesendet werden, ohne dessen Empfang die Einrichtung zum Zerlegen des Flugzeuges nicht aktiviert werden kann. Damit könnte eine Doppelkontrolle durchgeführt werden, indem nur dann, wenn zum einen die rechnerische Beurteilung der Situation aufgrund der Positionsdaten des Flugzeuges und des zu schützenden Objekts sowie der Flugdaten und außerdem der Empfang des korrekten Freigabesignals genau dieses zu schützenden Objekts insgesamt konsistent sind, eine Freigabe der Aktivierung erfolgt. Auch hier richtet sich die Erfindung wieder auf die flugzeugseitige Vorrichtung einschließlich geeignetem Empfänger sowie andererseits auf den Gesamtsatz einschließlich der zugehörigen Einrichtungen bei dem zu schützenden Objekt. Diese Ausführungsvariante der Erfindung kann dahingehend ausgestaltet sein, dass das Freigabesignal nur innerhalb eines sehr begrenzten Bereichs um das zu schützende Objekt herum empfangbar ist, der so eng bemessen ist, dass eine zu einer Zerlegung des Flugzeuges führende Beurteilung der Kollisionsgefahr innerhalb dieses Bereichs ernsthaft wahrscheinlich oder sogar sicher ist.

Die bisher abstrakt als Zerlegung des Flugzeuges behandelte Zerstörung kann in verschiedener Weise erfolgen. Zum einen kommt ein Sprengsatz in Betracht, der das Flugzeug wie ein Flugabwehrgeschoss oder eine Rakete sprengen könnte. Ein solcher Sprengsatz sollte vorzugsweise sehr gut gegen Hitzeeinwirkung und Erschütterungen gekapselt sein, so dass er im Fall eines anderweitigen Unfalls des Flugzeuges keine zusätzliche Gefährdung darstellt. Dabei kann der Sprengsatz auch geschickt platziert sein, so dass mit relativ kleinen Sprengsätzen bereits ein Auseinanderbrechen wesentlicher Teile des Flugzeuges ermöglicht wird. Ein Beispiel sind die Flügelansätze an der statischen Rumpfstruktur.

Ferner ist auch eine eher konstruktive Vorgehensweise denkbar, bei der beispielsweise durch eine Hydraulik zentrale statische Punkte der Flugzeugkonstruktion so geschwächt werden, dass das Flugzeug infolge der Belastungen durch den aerodynamischen Druck und das Eigengewicht zerbricht. Hier sind natürlich auch andere Varianten anstelle einer hydraulischen Vorrichtung denkbar. Beispielsweise könnten Verbindungsbolzen gelöst werden, z.B. an den erwähnten Flügelansätzen.

Schließlich ist es auch denkbar, den ohnehin an Bord des Flugzeuges gelagerten Kerosinvorrat als Sprengsatz zu verwenden. Dies hat den Vorteil, dass kein zusätzliches Gefährdungspotential eingebracht wird, weil der Kerosintank ohnehin unvermeidlicher Bestandteil jedes Flugzeuges ist. Ein an geeigneter Stelle im Kerosintank angebrachter oder auf diesen einwirkender Zündsatz könnte eine Explosion des Kerosintanks hervorrufen, selbst wenn dieser nur noch zu einem kleineren Teil gefüllt ist. Immerhin ist bereits die bei weitgehend entleertem Kerosintank noch vorhandene Gasphase explosiv. Auch bei dieser Lösung ist dafür Sorge zu tragen, dass ein Zünden bei einem "gewöhnlichen" Unfall absolut ausgeschlossen ist. Dies kann durch entsprechend redundante Sicherheitsvorrichtungen ohne weiteres geschehen.

Bevorzugt ist insgesamt, dass sich die Vorrichtung, mit Ausnahme der optionalen Sender seitens des zu schützenden Objekts, vollständig an Bord des betroffenen Flugzeuges befindet, damit das System möglichst aktionsbereichsunabhängig funktionstüchtig bleibt. Darüber hinaus sollte die Vorrichtung so ausgelegt sein, dass es für an Bord des Flugzeuges befindliche Personen grundsätzlich unmöglich ist, die Vorrichtung außer Betrieb zu nehmen.

Im Folgenden wird die Erfindung anhand eines Ausführungsbeispiels veranschaulicht. Dabei offenbarte Einzelmerkmale können auch in anderen Kombinationen erfindungswesentlich sein.
Figur 1 zeigt eine schematische Darstellung eines Flugzeugs mit einer erfindungsgemäßen Vorrichtung an Bord im Anflug auf ein zu schützendes Objekt;
Figur 2 zeigt eine schematische Darstellung des Flugzeugs mit der erfindungsgemäßen Vorrichtung in Draufsicht;
Figur 3 zeigt ein Blockschaltungsbild der erfindungsgemäßen Vorrichtung;
Figur 4 zeigt ein Detail der erfindungsgemäßen Vorrichtung.

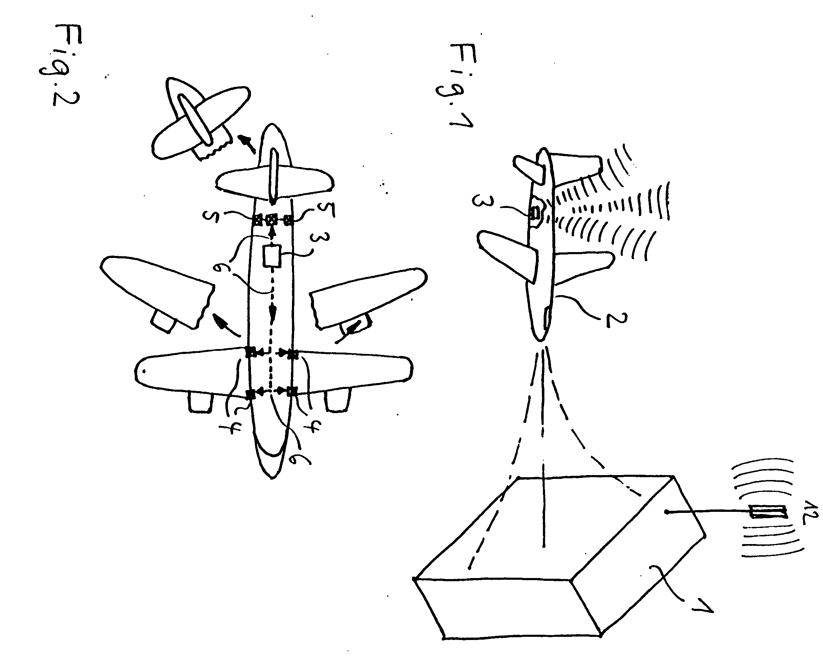

Figur 1 zeigt ein der Einfachheit halber als großer Quader dargestelltes zu schützendes Objekt 1, auf das sich ein Passagierflugzeug 2 im Anflug befindet. Die von dem Flugzeugbug ausgehenden gestrichelten Linien sollen verdeutlichen, dass es in der in Figur 1 symbolisierten Situation aufgrund der begrenzten Manövrierfähigkeit des Flugzeuges 2 ausgeschlossen ist, dass dieses durch ein Flugmanöver dem zu schützenden Objekt 1 ausweicht. Die Darstellung ist selbstverständlich nicht maßstäblich, so dass die Entfernung zwischen dem zu schützenden Objekt 1 und dem Flugzeug 2 bei einer realen Situation deutlich größer als eine Flugzeuglänge sein könnte und dennoch von einer Unvermeidlichkeit einer Kollision ausgegangen werden müsste.

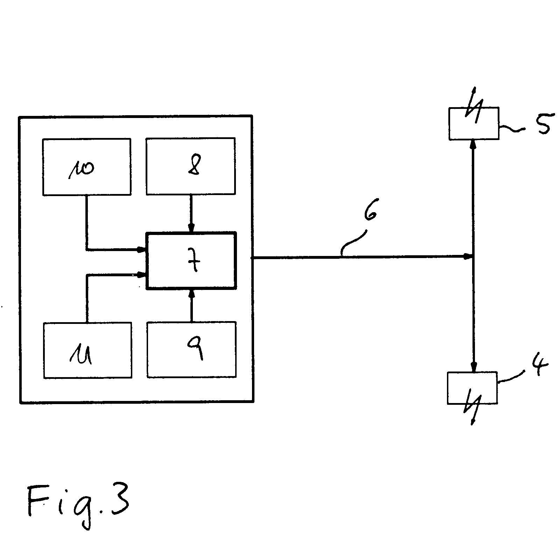

An Bord des Flugzeuges befindet sich eine in den Figuren 2 und 3 näher dargestellte und im Folgenden noch erläuterte erfindungsgemäße Vorrichtung, wobei in Figur 1 deren Steuergerät 3 dargestellt ist. Dieses Steuergerät 3 steht, wie angedeutet, in Funkverbindung mit Satelliten. Dazu weist das Steuergerät 3 eine GPS-Einheit auf, die Position und Fluggeschwindigkeit des Flugzeuges ermitteln kann. Ferner verfügt das Steuergerät 3 über eine Flughöheninformation, die von einem gewöhnlichen Höhenmessgerät an Bord des Flugzeuges 2 stammen kann.

Figur 2 verdeutlicht, dass über das Steuergerät 3 Sprengsätze 4 an Ansatzpunkten der Tragflächen am Flugzeugrumpf und Sprengsätze 5 zwischen dem Heckleitwerk und dem übrigen Flugzeugrumpf aktiviert werden können. Dazu ist das Steuergerät 3 mit den Sprengsätzen 4 und 5 über Signalleitungen 6 verbunden. Weder die Signalleitungen 6, noch die Sprengsätze 4 und 5, noch das Steuergerät 3 sind vom Inneren des Flugzeuges 2 aus zugänglich oder anderweitig zu deaktivieren. Sie sind vielmehr unzugänglich in der Flugzeugrumpfwand verbaut. Die Sprengsätze sind an statisch zentralen Stellen positioniert und so klein wie möglich ausgelegt, um zum einen ein Abtrennen der Tragflächen von dem Flugzeugrumpf mit Hilfe der Sprengsätze 4 und zum zweiten ein Abtrennen des Flugzeughecks mit Leitwerk mit Hilfe der Sprengsätze 5 zu ermöglichen. Dieses Abtrennen ist in Figur 2 schematisch dargestellt.

Die Sprengsätze 4 und 5 sind im Übrigen massiv gegen die Einwirkung von Hitze oder Erschütterungen gekapselt, so dass sie bei einem "normalen" Flugzeugunfall ohne Aktivierung durch das Steuergerät 3 nicht explodieren.

Natürlich können weitere Sprengsätze beispielsweise entlang der Länge des Rumpfes des Flugzeugs 2 vorgesehen sein, um auch diesen noch in weitere Einzelteile zu zerlegen.

In Folge einer solchen Sprengung des Flugzeuges 2 in mehrere Teile sind die einzelnen Teile nicht mehr flugfähig und stürzen ballistisch zu Boden. Insbesondere durch die Abtrennung der Tragflächen kommt es wohl zu einer Kerosinexplosion, da diese zumindest einen großen Teil des Kerosintanks enthalten und der Kerosintank bei einem Absprengen durch die Sprengsätze 4 höchstwahrscheinlich beschädigt wird. Die Kerosinexplosion wird vermutlich zu einer weiteren Zerstörung und Zerteilung des Flugzeuges in Bruchstücke führen.

Infolge dessen trifft das Flugzeug entweder gar nicht oder nur zu Teilen oder im schlechtesten denkbaren Fall zwar insgesamt, jedoch in Einzelteilen, auf das zu schützende Objekt 1 auf. In keinem Fall ist das Objekt 1 der konzentrierten Durchschlagskraft der Gesamtflugzeugmasse ausgesetzt. Im Übrigen erfolgt die unvermeidliche Kerosinexplosion in einem gewissen Abstand zu dem zu schützenden Objekt 1, so dass sie auf dieses nicht oder zumindest sehr viel weniger zerstörerisch wirkt. Infolge dessen treten an dem Objekt 1 keine oder geringere Schäden auf. Die Einzelheiten hängen davon ab, in welchem Abstand von dem Objekt 1 die Sprengung des Flugzeuges 2 erfolgt und ob die dabei entstehenden Bruchstücke noch vor dem Objekt 1 ballistisch zu Boden fliegen oder bis zu dem Objekt 1 weitergetragen werden. In jedem Fall ist davon auszugehen, dass ohne die Sprengung mit der erfindungsgemäßen Vorrichtung infolge der Kollision zwischen dem Flugzeug 2 und dem Objekt 1 ein Unglück hervorgerufen würde, das den überaus wahrscheinlichen Tod sämtlicher Passagiere des Flugzeuges 2 bei weitem übersteigt. Andererseits kann durch die erfindungsgemäße Vorrichtung der Tod der Passagiere zwar nicht verhindert werden, jedoch der Schaden an dem Objekt 1 deutlich verringert oder gar abgewendet werden.

Figur 3 illustriert den Aufbau des Steuergeräts 3, wobei stellvertretend nur zwei der Sprengsätze 4 und 5 dargestellt sind.

Das Steuergerät 3 beinhaltet eine zentrale Rechnereinheit (CPU) 7, ein GPS-System 8 und einen Speicher 9 sowie einen Positionsdatenempfänger 10 und einen Freigabesignalempfänger 11. Das GPS-System 8 ermittelt die Flugdaten und nimmt dabei, falls nicht durch das GPS-System 8 zu erhalten, die durch ein konventionelles Höhenmessgerät ermittelte Flugzeughöhe hinzu. In dem Speicher 9 sind Positionsdaten des Objekts 1 (und andere Objekte) abgelegt, die über eine Funkverbindung zwischen dem Empfänger 10 und dem in Figur 1 dargestellten Sender 12 empfangen bzw. aktualisiert werden könnten. Die zentrale Rechnereinheit 7 ermittelt aus den Flugdaten und Positionsdaten des Flugzeuges 2 aus der GPS-Einheit 8 und aus den Positionsdaten des Objekts 1 aus dem Speicher 9, ob unter Zugrundelegung der ebenfalls in dem Speicher 9 abgelegten Daten zur Manövrierfähigkeit des Flugzeugs 2 unter Extrembedingungen noch ein Ausweichen durch ein Notmanöver des Piloten denkbar wäre. Wenn die zentrale Rechnereinheit 7 ab einem bestimmten minimal zulässigen Abstand (mit Rücksicht auf die übrigen Flug- und Positionsdaten) von dem Objekt 1 zu dem Schluss kommt, dass ein Ausweichen aus physikalischen Gründen völlig ausgeschlossen ist, aktiviert sie die Sprengung mit Hilfe der Sprengsätze 4 und 5 über die Leitungen 6. Dabei ist als zusätzlicher Sicherheitsprüfvorgang vorgesehen, dass die Aktivierung der Sprengsätze 4 und 5 nur dann erfolgen kann, wenn die zentrale Rechnereinheit 7 über den Funkempfänger 11 ein von dem Objekt 1 ebenfalls über den Sender 12 ausgesandtes und nur innerhalb eines kritischen Abstandes um das Objekt 1 empfangbares Freigabesignal erhält. Dabei kann überprüft werden, ob die Identität des Objektes 1 im Hinblick auf das Freigabesignal und im Hinblick auf die Auswertung durch die zentrale Rechnereinheit 7 konsistent ist.

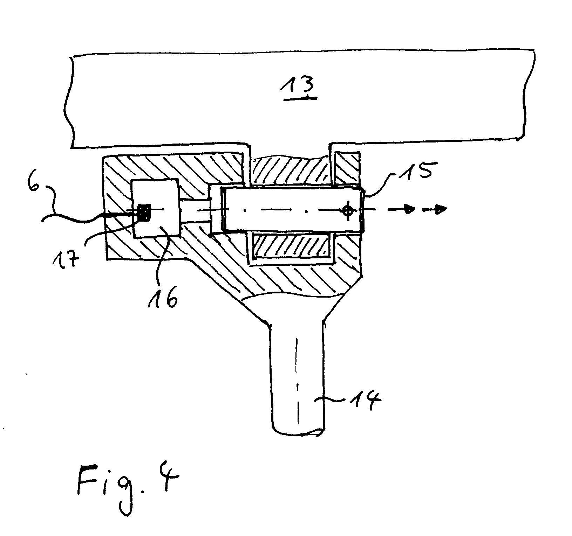

Figur 4 veranschaulicht schematisch eine Möglichkeit, zentrale statische Punkte des Flugzeugs 2 durch die erfindungsgemäße Vorrichtung anzugreifen. Die Figur zeigt zwei tragende Teile 13 und 14 der Statik des Flugzeugs 2, die durch einen Bolzen 15 miteinander verbunden sind. Der Bolzen 15 kann durch einen Überdruck aus einer Kammer 16 so weit bewegt werden, dass die Verbindung zwischen den Teilen 13 und 14 gelöst wird. Dazu kann in der Kammer 16 ein Sprengsatz vorgesehen sein, der durch einen Zünder 17 in gleicher Weise gezündet wird, wie die schon in Figur 2 dargestellten Sprengsätze 4 und 5.

Alternativ dazu könnte die Kammer 16 an ein Hydrauliksystem angeschlossen sein, mithilfe dessen der Bolzen 15 bewegt wird. Dazu müsste die Kammer 16 in ähnlicher Weise wie über die Zündleitung 6 über eine Hydraulikleitung angeschlossen sein.

Diese Darstellung soll nur schematisch verdeutlichen, dass sich sowohl mit Sprengsätzen, als auch mit anderen Einrichtungen die Statik eines Flugzeuges 2 auflösen oder soweit schwächen lässt, dass das Flugzeug 2 in Teile zerfällt, ohne dass dabei besonders große Sprengsätze oder anderweitig gefährliche Einrichtungen notwendig wären, die bei "gewöhnlichen" Flugzeugunfällen ein erhebliches Risiko darstellen könnten. Ähnliches gilt im übrigen für die bereits zuvor angesprochene Möglichkeit einer Kapselung von Sprengsätzen, die hier nicht zeichnerisch dargestellt ist.

## Patentansprüche

1. Vorrichtung zur Minderung der Folgen einer drohenden Kollision eines Flugzeuges (2) mit einem zu schützenden Objekt (1) mit:
einer Positioniereinrichtung (8) zum Ermitteln von Positionsdaten des Flugzeugs (2),
einem Rechner (7), der aus den Positionsdaten und der Fluggeschwindigkeit und Flugrichtung sowie aus Positionsdaten des zu schützenden Objekts (1) berechnet, ob die Kollision des Flugzeugs (2) mit dem zu schützenden Objekt (1) wahrscheinlich ist,
und einer Einrichtung (4 - 11, 16, 17), die eine Zerlegung des Flugzeuges (1) in mehrere Teile herbeiführt, wenn die Berechnung ergibt, dass die Kollision wahrscheinlich ist.

2. Vorrichtung nach Anspruch 1, bei der die Positioniereinrichtung (8) ein satellitengestütztes Positioniersystem ist.

3. Vorrichtung nach Anspruch 1 oder 2, die dazu ausgelegt ist, die Fluggeschwindigkeit und die Flugrichtung mit Hilfe der Positioniereinrichtung (8) zu ermitteln.

4. Vorrichtung nach einem der vorstehenden Ansprüche, bei der der Rechner (7) berechnet, ob die Kollision des Flugzeugs (2) mit dem zu schützenden Objekt (1) noch abzuwenden ist, und die Einrichtung (4-11, 16, 17) zum Zerlegen des Flugzeugs (2) nur dann aktiviert wird, wenn die Berechnung ergibt, dass die Kollision aus physikalischen Gründen unvermeidlich ist.

5. Vorrichtung nach einem der vorstehenden Ansprüche die einen Speicher (9) enthält, in dem Daten von in einem Aktionsbereich des Flugzeugs (2) vorhandenen zu schützenden Objekten (1) abgespeichert werden können, um bei der Berechnung verwendet zu werden.

6. Vorrichtung nach einem der vorstehenden Ansprüche mit einem Empfänger (10) zum Empfangen der Positionsdaten von in einem Umfeld des Flugzeugs (2) vorhandenen zu schützenden Objekten (1) zur Verwendung bei der Berechnung.

7. Vorrichtung nach Anspruch 6 mit einem Sender (12) am Ort eines zu schützenden Objekts (1) zum Senden der Positionsdaten des zu schützenden Objekts (1) zur Verwendung bei der Berechnung.

8. Vorrichtung nach einem der vorstehenden Ansprüche mit einem Empfänger (11) zum Empfangen eines von zu schützenden Objekten (1) auszusendenden Freigabesignals, wobei die Vorrichtung so ausgelegt ist, dass ohne dessen Empfang die Einrichtung (4 - 11, 16, 17) zum Zerlegen des Flugzeugs (2) nicht aktiviert werden kann.

9. Vorrichtung nach Anspruch 8 mit einem Sender (12) am Ort des zu schützenden Objekts (1) zum Senden des Freigabesignals.

10. Vorrichtung nach Anspruch 8 oder 9, die so ausgelegt ist, dass das Freigabesignal nur innerhalb eines Umfeldes um das zu schützende Objekt (1) empfangen werden kann, das so bemessen ist, dass es zumindest wahrscheinlich ist, dass die Berechnung ergibt, dass die Kollision nicht mehr abzuwenden ist, wenn sich das Flugzeug (2) innerhalb dieses Umfeldes befindet.

11. Vorrichtung nach einem der vorstehenden Ansprüche, bei der die Einrichtung zum Zerlegen des Flugzeuges (2) einen Sprengsatz (4, 5) aufweist.

12. Vorrichtung nach Anspruch 11, bei der der Sprengsatz (4, 5) gegen Hitze und Erschütterung gekapselt ist.

13. Vorrichtung nach einem der vorstehenden Ansprüche, bei der die Einrichtung (4 - 11, 16, 17) dazu ausgelegt ist, gezielt auf zentrale statische Punkte des Flugzeugs (2) einzuwirken, um das Flugzeug (2) in mehrere Teile zu zerlegen.

14. Vorrichtung nach Anspruch 13, bei der die Einrichtung eine Hydraulik aufweist, mit der die zentralen statischen Punkte geschwächt werden können.

15. Vorrichtung nach einem der vorstehenden Ansprüche, bei der die Einrichtung zum Zerlegen des Flugzeuges eine Zündeinrichtung ist, die dazu ausgelegt ist, den Treibstofftank des Flugzeuges zur Explosion zu bringen.

16. Vorrichtung nach einem der vorstehenden Ansprüche, jedoch nicht nach Anspruch 7 oder 9, die sich vollständig an Bord des Flugzeuges (2) befindet.

17. Vorrichtung nach einem der vorstehenden Ansprüche, die so ausgelegt ist, dass sie von Personen an Bord des Flugzeuges (2) nicht deaktiviert werden kann.
